(19)

Europäisches
Patentamt
European
Patent Office
Office européen
des brevets

(11) **EP 1 515 162 B1**

(12) **EUROPEAN PATENT SPECIFICATION**

(45) Date of publication and mention
of the grant of the patent:
**21.05.2008 Bulletin 2008/21**

(21) Application number: **03741719.3**

(22) Date of filing: **28.05.2003**

(51) Int Cl.:
***G01S 17/88*** *(2006.01)*　　***H04B 10/02*** *(2006.01)*

(86) International application number:
**PCT/RU2003/000239**

(87) International publication number:
**WO 2003/102626 (11.12.2003 Gazette 2003/50)**

(54) **DEVICE FOR DETECTING OPTICAL AND OPTOELECTRONIC OBJECTS**

GERÄT ZUM ENTDECKEN VON OPTISCHEN UND OPTOELEKTRONISCHEN OBJEKTEN

DISPOSITIF DE DETECTION D'OBJETS OPTIQUES ET OPTOELECTRONIQUES

(84) Designated Contracting States:
**AT BE BG CH CY CZ DE DK EE ES FI FR GB GR HU IE IT LI LU MC NL PT RO SE SI SK TR**

(30) Priority: **31.05.2002 RU 2002114235**

(43) Date of publication of application:
**16.03.2005 Bulletin 2005/11**

(73) Proprietors:
• **FEDERALNOE GOSUDARSTVENNOE UNITARNOE PREDPRIYATIE "OSOBOE KONSTRUKTORSKOE BYURO VYSOKOENERGETICHESKI Moscow 123424 (RU)**
• **Skripka, Mikhail Yurevich Moscow 117311 (RU)**

(72) Inventors:
• **SKRIPKA, Mikhail Yurevich Moscow, 117311 (RU)**
• **CHEBURKIN, Nikolai Vsevolodovich Moscow, 125130 (RU)**
• **NOSYREV, Alexandr Alexeevich Moscow, 117465 (RU)**
• **RUZIN, Mikhail Vladimirovich Moscow, 107014 (RU)**

(74) Representative: **Bucher, Ralf Christian Arth, Bucher & Kollegen Patentanwälte Alte Landstrasse 23 85521 Ottobrunn (DE)**

(56) References cited:
WO-A1-94/04942　　　GB-A- 2 174 862
RU-C1- 2 059 961　　　RU-C1- 2 155 357
US-A- 4 902 128　　　US-A- 4 995 102

## Description

## FIELD OF THE INVENTION

The present invention relates to the field of optoelectronic instrument manufacture, laser radar measuring and informational technique, safeguarding systems, namely: to surveillance optoelectronic systems of laser range and detection that make use of the principle of reflection of optical radiation from an object to be investigated by analyzing a back-scattered signal, in particular, it relates to optoelectronic means and devices for the remote observation and detection of optical and optoelectronic objects under conditions of limited vision, and may be used in airplane landing, mining and search-and-rescue operations, for the purposes of guarding, hunting, military engineering, in optical communication lines, etc., for the remote observation, tracking and detection of optical and optoelectronic instruments that carry out counter observation and aiming, and also as a display unit of such systems and devices when their optical and optoelectronic instruments fall within an observer's view (for example, binoculars, telescopes, photographic cameras, video cameras, motion-picture cameras, optical sights of small arms, tanks, artillery and rocket-propelled launchers, etc.), instruments for aiming, observation, reconnaissance, etc., and any other instruments provided with optical objective lenses.

## BACKGROUND OF THE INVENTION

Nowadays, in the conduction of reconnaissance, aiming and observation, optical and optoelectronic instruments and systems are widely used, including night vision instruments (hereinafter "NVIs"), among them optical radars, laser rangers, infrared (IR) NVIs, etc., which allow for the observation of objects irradiated with the radiation in visible, ultraviolet and IR ranges of electromagnetic spectrum.

The known devices for a long-range detection of optical and optoelectronic objects suffer from the grave drawbacks under complicated background conditions: for example, against a masking background of diffusion-reflecting objects: walls of houses, mountains, forests, bushes, the ground, when detecting from flying vehicles. Since in this case the total area of a diffuse object to be illuminated by a laser beam significantly greater than an aperture of the input optics of optical and optoelectronic objects; the level of a signal reflected therefrom becomes comparable with that of a signal reflected from the diffuse object and, what is important, in the bright sunny day the signal is comparable with a background noise of the solar radiation re-reflected with an underlying surface even when applying special light filters with a narrow pass band. When setting a threshold at a low level, there is an increased probability of a "false" actuation at the expense of a signal from the diffuse object, whereas when the threshold is set at a high level, there is an increased probability of missing the signal from the input optics of optical and optoelectronic objects, which entails the decrease in the effective detection range and the need for a considerable rise in a required radiation power of illumination.

The existing technical solutions of a long-range detection of the input optics of optical and optoelectronic objects are generally based on the methods of the laser range and detection using the range gating of the space to be investigated. The analysis of the efficiency of this method shows that by virtue of the above reasons it prevents the conduct of the detection of means of observation and reconnaissance within the confines of a broad instantaneous visual field of the space with a required degree of the detection probability (more than 0.8). By virtue of this fact, when conducting a reconnaissance in a broad image field of the surrounding area, there is decrease in the probability of detection and speed of the space reconnaissance and thus of the secrecy and, as a consequence, of the efficiency of using the technical equipment.

There has been known a laser system for the detection of optoelectronic objects comprising a frequency-pulsed laser (FPL) and a photodetector (PD) both being hinged, said hinge allowing for their vibratory-rotational motion in the vertical plane and being fixed in the center of a platform rotating around a vertical axis; objective lenses having parallel optical axes; and a signal processing device in the form of in-series connected a threshold device of the laser radiation intensity, a counter of emission impulses of the FLP, a pick-up of an angular position of the FLP and PD, said pick-up being connected to the platform rotating around a vertical axis and a hinge of the vibratory-rotational motion of the FLP and PD; a unit for the determination of coordinates of an optoelectronic object; and a sound signaling device; the input of the threshold device of the laser radiation intensity being connected to the output of the PD, a second input of the counter of emission impulses of the FLP being connected to the FLP, a PD objective lens being provided with a narrow-band interference filter with a pass band equal to a FLP spectrum line width, a distance $\Delta$ between optical axes of objective lenses of the FLP and PD is given by the following condition:

$$\Delta \leq \lambda\ D{\cdot}I + D/2,$$

where $D$ is an optoelectronic object aperture; $\lambda$ is an emission wavelength of the FLP; $I$ is a distance from an input pupil of the PD to the optoelectronic object; an angular rotational speed $\omega_2$ of the platform around a vertical axis is equal to:

$$\omega_2 = \theta_2 {\cdot} v,$$

and an angular speed $\omega_6$ of the vibratory-rotational motion of the hinge in the vertical plane is given by the following expression:

$$\omega_6 = (\theta_2 \cdot \theta_6 \cdot v)/2\pi,$$

where $\theta_2 \cdot \theta_6$ is a radiation divergence of the FLP in the horizontal and vertical axes, respectively; $v$ is a pulse-recurrence frequency of the FLP (see, for example, Russian Federation Patent 2,113,717, Int. Cl. G 01 S 17/06, dated 1998).

The operation of such system is low-efficient for the above reasons. There has been known a device for the detection of optical and optoelectronic objects comprising laser systems for the detection of optical and optoelectronic objects spaced relative to each other a basic distance apart, said systems being located in the same plane and each being fixed on a rotating platform with the possibility of its vibratory-rotational motion and each involving a frequency-pulsed laser with an objective lens, a photodetector with an objective lens, a counter of emission impulses of the frequency-pulsed laser, a pick-up of an angular position of the photodetector and the frequency-pulsed laser, and a unit for the determination of angular coordinates of optical and optoelectronic objects, a data display unit with its input connected to the output of a memory unit, a unit for calculating true coordinates of optical and optoelectronic objects connected with its first and second inputs to the outputs of the first and second laser systems for the detection of optical and optoelectronic objects, a unit for sampling the detected objects connected with its output to a second input of the memory unit a first input of which being connected to the output of the unit for calculating true coordinates of optical and optoelectronic objects, and a unit for calculating current coordinates connected with its output to a third input of the memory unit (see, for example, Russian Federation Patent 2,129,288, Int. Cl. G 01 S 17/06, G 01 C 3/08, dated 1999).

However, this device for the detection of optical and optoelectronic objects suffers from the same drawbacks.

There has also been known a device for the detection of optical and optoelectronic objects by scanning a region to be radar-detected, comprising a frequency-pulsed laser and an image converter with an objective lens, a photodetector with an objective lens, said photodetector being connected with its input to the output of the image converter, a video control device connected with its input to the output of the photodetector, a vide signal processing unit connected with its first input to the output of the photodetector, a synchronizer connected with its first input to the output of the photodetector and with its second output - to a second input of the vide signal processing unit, a first and a second pulsed sources of high voltage connected with their inputs to a first output of the synchronizer, the output of the first pulsed source being connected to a third input of the image converter, a disabling-pulse unit connected with its first input to the output of the second pulsed source, its second input - to a third output of the synchronizer and its output - to a second input of the image converter, a control board connected with its output to a second input of the synchronizer, a frame frequency divider connected with its input to a fourth output of the synchronizer and a first output - to a third output of the vide signal processing unit, a modulator connected with its first input to a second output of the frame frequency divider, a second input - to a fifth output of the synchronizer and the output - to the input of the frequency-pulsed laser, an automatic gain control connected with its input to the output of the photodetector and first, second and third outputs - to the input of the objective lens, a fourth input of the image converter and the input of the photodetector objective lens respectively, and an alarm signal device (see, for example, Russian Federation Patent 2,129,287, Int. Cl. G 01 S 17/00, dated 1999).

Hence, the closest prior art with respect to the present invention has been disclosed in a device for the detection of optical and optoelectronic objects by scanning a region to be radar-detected, comprising a laser radiator with a power supply unit, said radiator being optically matched with an optical element forming a laser radiation, a photodetector with an input objective lens, a signal processing unit connected with its input to the output of the photodetector, a control device for displaying the detected object and an indicator.

The drawbacks to the active NVIs of the 3rd and 4th generation, for instance, operating on the principle of illumination of the surrounding area and objects located thereon with the beams of an IR-searchlight followed by their observation with the passive NVIs, in which, in order to increase an image brightness, use is made of an image converter (IC) energized from a secondary d.c. high-voltage source through a high-resistance voltage divider that enables a required distribution of potentials at the IC electrodes, reside in a high sensitivity to local light noises (bright light flashes, headlights of automobiles, open fire, other bright light flashes), a "back" flare spot of the NVIs with the IR-searchlight radiation scattered on the atmospheric non-uniformity, which reduces the observation range, and also large sizes and weight. In so doing visibility, for example in IR NVIs, decreases when they come into the view of bright light sources. If the light from fires, flares, large bonfires, etc. falls within a receiver of, for example, IR NVIs, there is observed a phenomenon that resembles a temporary dazzle of a car-driver by headlights of a car coming from the opposite direction. A bright spot emerges in the instrument, thus preventing from the observation of objects possessing a lesser brightness. The effect of a rather powerful radiation on a receiver of the NVI (an optical radar, laser ranger, etc.) may make the receiver inoperative at all.

The device for the detection of optical and optoelectronic objects in accordance with the closest prior art with respect to the present invention suffers from all these drawbacks. It prevents the provision and conduct of the reconnaissance in a broad image field of the surrounding area with a high degree of the detection probability (more than 0.8) at distances up to 1 km because of limitation as to a required intensity of an illuminating semiconductor laser radiation.

What is more, for the above-indicated reasons, the known technical solution makes use of a complicated system for adjusting and controlling the detection device, which requires a specialized training of the operator and relatively extended adjustment time.

US4,902,128 discloses an apparatus for harmonizing onto a common reference axis the optical/optronic axes of an aiming apparatus consisting of day sight channel and combined thermal image/laser reception channel with a stand alone laser transmitter. The laser radiation reflected by the target is incident together with the target and ambient inherent radiation via the scanning mirror on selected elements of the detector row array, is optoelectronically converted and represented on the light-emitting diode array. Via the back of the mirror the signals are imaged on the retina by means of the deflection mirror swung into the ray path. The visible radiation imaged in the plane of the day reticle also passes to the observer's eye when the deflection mirror is swung out. The visible radiation in the day sight channel can be observed when the deflection mirror is swung out via an imaging in the plane of the day reticle. By observation of the thermal image the day reticle is replaced by the thermal image reticle which is mirrored into the thermal image reproduction channel and superimposed on the thermal image. In the harmonized condition it is shifted onto the position of the day reticle

## SUMMARY OF THE INVENTION

It is an object of the present invention to eliminate the drawbacks outlined above.

This object is solved by a device with the features according to claim 1.

In order to attain the above object, in a device for the detection of optical and optoelectronic objects by scanning a region to be radar-detected, comprising a laser radiator with a power supply unit, said laser radiator being optically matched with an optical element forming a laser radiation, a photodetector with an input objective lens, a signal processing unit connected with its input to the output of the photodetector, a control unit for displaying a detected object and an indicator, according to the present invention, the optical element of the laser radiator is made to the shape of a cylindrical objective lens that affords the generation of an indicatrix of the laser radiation with the distribution of intensity in the distant zone in the form of a "narrow knife"; the photodetector is made to the shape of a strip of receivers of the photodetector and mounted to an upright position in the focal plane of a receiving channel; the control unit for displaying a detected object is made to the shape of a strip of light indicators for displaying a detected object, said strip being mounted on the vertical axis in a plane conjugated with an image field of the surrounding area; both vertical and horizontal axes of the indicatrix of the cylindrical objective lens of the laser radiator, both vertical and horizontal axes of a radiation receive field of the strip of the receivers of the photodetector, and both vertical and horizontal axes of a display field of a detected object of the strip of the light indicators for displaying a detected object are alignment matched in an image field of the surrounding area of an observer; each light indicator of the strip for displaying a detected object is connected through the signal processing unit and through the output of the photodetector to a respective group of the receivers of the strip of the photodetector, respective outputs of said receivers being connected to the output of the photodetector; the input objective lens of the photodetector is optically matched with inputs of the receivers of the strip of the photodetector; an input of the power supply unit of the laser radiator is in electrical connection with one of outputs of the signal processing unit to ensure the control of operating conditions of the laser radiator.

It is advisable that the device be supplemented with a sound signaling device that is in electrical connection with one of outputs of the signal processing unit, in order to attract the operator's attention.

It is preferred to additionally provide the device with an observation system mounted to transmit a light signal of the detection of an optical or optoelectronic object from a respective light indicator to an observer.

It is advisable that the observation system be made to the shape of in-series located and optically matched to each other along the horizontal axis: an optico-visual observation channel of an eyepiece, a light-splitting cube, a reticle, an optical inversion system and a transmit objective lens; said observation system being mounted to enable an optical match between the light-splitting cube and the light indicators of the strip for displaying a detected object and a subsequent transmission of the light signal of the detection of an optical and/or optoelectronic object from a respective light indicator to an observer.

It is preferred that the said cylindrical objective lens be made to the shape of a cylindrical aspherical lens with an elliptical contour of the forming surface.

It is advisable that the said input objective lens of the photodetector be provided with a narrow-band interference filter.

It is preferred that the said input objective lens of the photodetector be made with an automatic control enabling the maintenance of an optimal signal level at the input of the receivers of the strip of the photodetector as a signal level on the pupil of the input objective lens changes.

## BRIEF DESCRIPTION OF THE DRAWINGS

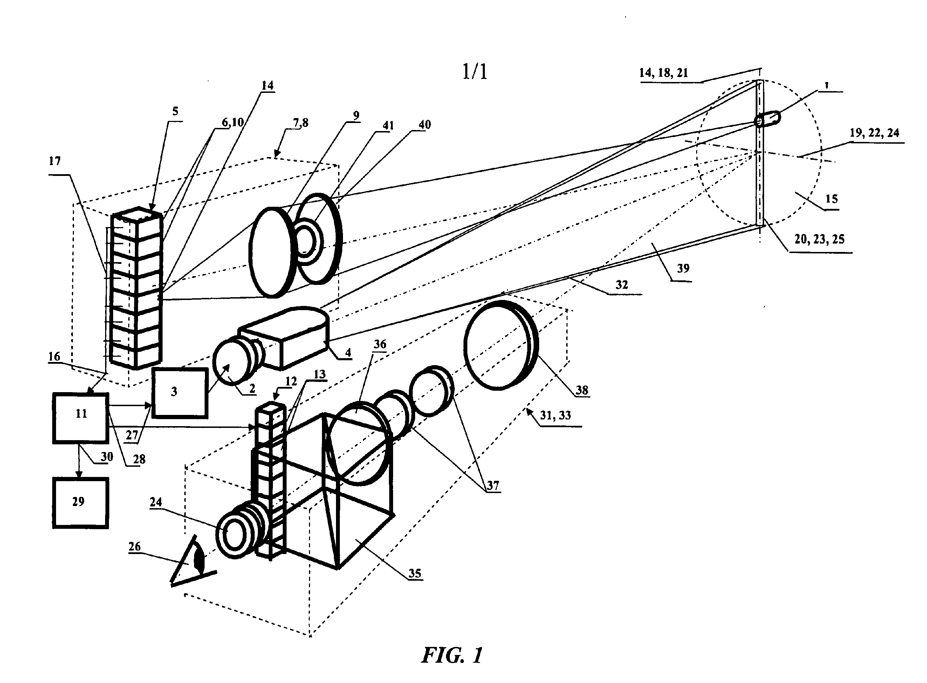

FIG. 1 is a diagram illustrating one of the best modes for carrying out a device according to the present invention.

## BEST MODE TO CARRY OUT THE INVENTION

A device for the detection of optical and optoelectronic objects 1 comprises a laser radiator 2 with a power supply unit 3, said laser radiator being optically matched with a cylindrical objective lens 4 forming a laser radiation, a strip 5 of receivers 6 of a photodetector 7, said strip being mounted to an upright position in the focal plane of a receiving channel 8, with an input objective lens 9 optically matched with inputs 10 of the receivers 6 of the strip 5 of the photodetector 7, a signal processing unit 11, a strip 12 of light indicators 13 for displaying a detected object 1, said strip being mounted on the vertical axis 14 in an image field of the surrounding area 15; each light indicator 13 of the strip 12 for displaying a detected object 1 is connected through the signal processing unit 11 and through the output 16 of the photodetector 7 to a respective group of the receivers 6 of the strip 5 of the photodetector 7 through respective outputs 17 of the receivers 6; both vertical 18 and horizontal 19 axes of an indicatrix 20 of the cylindrical objective lens 4 of the laser radiator 2, both vertical 21 and horizontal 22 axes of a radiation receive field 23 of the strip 5 of the receivers 6 of the photodetector 7, and both vertical 14 and horizontal 24 axes of a display field 25 of a detected object 1 of the strip 12 of the light indicators 13 for displaying a detected object 1 are alignment matched in an image field of the surrounding area 15 of an observer 26; whereas an input 27 of the power supply unit 3 of the laser radiator 2 is in electrical connection with one of outputs 28 of the signal processing unit 11 to ensure the control of operating conditions of the laser radiator 2.

The device also comprises a sound signaling device 29 that is in electrical connection with one of outputs 30 of the signal processing unit 11.

The device also comprises an observation system 31 made to the shape of in-series located and optically matched to each other along the aiming axis: an optico-visual observation channel 33 of an eyepiece 34, a light-splitting cube 35, a reticle 36, an optical inversion system 37 and a transmit objective lens 38; the said observation system 31 being mounted to enable an optical match between the light-splitting cube 35 and the light indicators 13 of the strip 12 for displaying a detected object 1 and a subsequent transmission of the light signal of the detection of an optical and/or optoelectronic object 1 from a respective light indicator 13 to an observer 26.

The laser radiator 2 with the cylindrical objective lens 4 are designed to form a beam of an illuminating radiation whose indicatrix 20 takes the form of a "narrow knife" 39 (with the ratio of angular dimensions in mutually perpendicular directions equal to more than 10). The cylindrical objective lens 4 enables one to form the indicatrix 20 of the radiation in the form of a "narrow knife", the latter being optically matched with a vertical line of the reticle of the optico-visual observation channel 33 in the plane of locating the object 1 and having a divergence in the vertical plane, said divergence corresponding to a visual field of the optico-visual observation channel 33 and several angular minutes in the horizontal plane.

The cylindrical objective lens is made to the shape of a cylindrical aspherical lens with an elliptical contour of the forming surface.

The strip 5 of the receivers 6 of the photodetector 7 is designed to ensure reception of an illuminating radiation of the laser radiator 2, said radiation being re-reflected from optical and optoelectronic objects 1 and returned to a device for the detection of said optical and optoelectronic objects 1, to convert this signal into a proportional electrical signal at the output of each elementary receiver 6 of the strip 5 and to transmit the received signal to the signal processing unit 11.

The input objective lens 9 is designed to receive radiation reflected from optical and optoelectronic objects 1 and returned to a device for the detection of said optical and optoelectronic objects 1 and to concentrate radiation on sensitive platforms of the receivers 6 of the strip 5 of the photodetector 7.

The signal processing unit 11 is designed to receive a signal from the receivers 6 of the strip 5 of the photodetector 7, to process this signal and to warn the alarm (in the case of releasing such reflected radiation [speck of light] from optical and optoelectronic objects 1 in comparison with a background (solar, fire light, headlight, etc.)) radiation, as well as with a diffusion-reflected radiation of the laser radiator from the area of space to be radar-detected (a sector of the surrounding area 15), that is, in the detection of optical and optoelectronic objects 1 with a sound signal (with the availability of this function in the signal processing unit 11) and/or by transmitting an electrical pulse to a strip 12 of light indicators 13 for displaying a detected object 1 in order to switch a respective signaling light indicator 13 and to shape control pulses for the power supply unit 3 of the laser radiator 2 and, as a consequence, emission impulses of illumination to be shaped by the laser radiator 2.

The strip 12 of the light indicators 13 for displaying the detected object 1 is designed to receive a signal from the signal processing unit 11, to display, by means of a light indicator 13, the detected optical and optoelectronic object 1 by transmitting a light signal of the detection of an optical or optoelectronic object 1 through a light-splitting cube 35 of an optico-visual observation channel 33 of an observation system 31 to the retina of an observer 26.

The power supply unit 3 of the laser radiator 2 is designed to shape current supply pulses to the laser radiator 2.

The observation system 31 is designed to view the area of space to be radar-detected (a sector of the surrounding area 15) by the observer 26, to find the position of the detected optical object 1 with the tie to an area surrounding the object 1 at the expense of superimposition on the retina of the observer 26 of an image of the area to be observed and an image of the luminous light indicator 13 of the strip 12 for displaying the detected object 1, said images being spatially correlated by means of the light-splitting cube 35 with the optico-visual observation channel 33 of the observation system 31.

Each light indicator 13 of the strip 12 for displaying the detected object 1 is connected through the signal processing unit 11 and through the output 16 of the photodetector 7 to a respective group of the receivers 6 of the strip 5 of the photodetector 7, respective outputs 17 of said receivers 6 being connected to the output 16 of the photodetector 7.

When feeding a primary power, the power supply unit 3 carries out quasi-continuous feeding of the laser radiator 2, which generates a frequency train of emission impulses with the emission wavelength of 0.8-1 $\mu$m.

The area of space to be radar-detected (a sector of the surrounding area 15), where an optical or optoelectronic object 1 to be detected is present, is irradiated with the quasi-continuous radiation of the laser radiator 2 with a high repetition rate, for example 500 Hz.

In the radar-detection of the area of space (a sector of the surrounding area 15) by means of an illuminating laser radiation to observe optical and optoelectronic objects 1, the cylindrical objective lens 4 provides the generation of the illuminating laser radiation from the laser radiator 2 as a beam with the indicatrix 20 in the form of a "narrow knife" 39. In so doing, the vertical axis 18 of the radiation indicatrix 20 coincides with the vertical axis 21 of the optico-visual observation channel 33 of the observation system 31.

The detection of optical and optoelectronic objects is carried out by scanning with an aiming axis 32 of the observation system 31 a selected area of space (a sector of the surrounding area 15) in the azimuth plane (including manually). The availability of the laser radiation with the indicatrix 20 in the form of a "knife" 39 makes it possible to detect objects 1 performing counter observation and aiming which have come in the scanning into the view of a respective receiver 6 of the strip 5 of the photodetector 7 and are located along the entire depth of the area of space to be radar-detected (a sector of the surrounding area 15). This is explained by a characteristic property of the design of the aforementioned objects 1, namely by the fact the radiation that falls within their input aperture finds its way inward and is reflected from the surfaces of optical parts and receiving platforms of these devices; as a result, the object 1 reflects the radiation with a complex indicatrix having, however, a high reverse directivity toward the radiation source to be determined mainly by elements mounted in focal planes or nearby.

The reflected radiation (specks of light) of the laser radiator 2 from optical and optoelectronic objects 1 and other objects of the surrounding area 15 in the area of space to be radar-detected (a sector of the surrounding area 15), is received and, if need be, concentrated by the input objective lens 9 (made, for example, to the shape of a positive lens) of the photodetector 7.

The input objective lens 9 forms am image of projection of the area of space to be radar-detected (a sector of the surrounding area 15), which is projected on optical inputs located in the vicinity of the focal point of the input objective lens 9, or directly on photosensitive elements of respective receivers 6 of the strip 5 of the photodetector 7 (a linear a multiple-unit receiver) mounted to an upright position in the focal plane of the receiving channel 8, and detected by the receivers 6 of the strip 5 of the photodetector 7, while generating at the output of respective receivers 6 of the strip 5 of the photodetector 7 an electrical signal, said signal being proportional to intensity of the radiation reflected from optical and optoelectronic objects 1 and other objects of the surrounding area 15 in the area of space to be radar-detected (a sector of the surrounding area 15) .

The strip 5 of the receivers 6 of the photodetector 7 is mounted in the focal plane of the receiving channel 8 and optically matched with the indicatrix 20 of radiation of the laser radiator 2 (that is, a visual field of the receiving channel 8 corresponds to the indicatrix 20 of radiation of the laser radiator 2).

The majority of optical and optoelectronic objects 1 to be detected are located, as a rule, in the plane of an angle of elevation close to the skyline. That is why, to improve the efficiency of searching the aforementioned objects 1, it is advisable to perform scanning with the device for the detection of optical and optoelectronic objects in the azimuth plane; in so doing, a preferred orientation of the indicatrix 20 of radiation of the laser radiator 2 relative to the earth is vertical. On the other hand, when scanning manually, in order to rule out the effect of hands' tremor on the probability of detection and also to decrease the influence of individual features of the operator when scanning large areas (buildings, mountains, etc.), a visual field of the linear receiver in the plane of an angle of elevation should be no less than 3°-4° with a high repetition rate of pulses of the illuminating radiation of the laser radiator 2, for example 500-1,000 Hz.

A major factor that increases a signal-to-noise ratio at the input of a single-unit receiver 6 is a combined use of the radiator with a knife-shaped indicatrix and the strip 5 of the receivers 6 of the photodetector 7. This affords an increase in the concentration of the illuminating radiation of the laser radiator 2 within the limits of a "narrow knife", which amplifiers the reflection of radiation by an optical and optoelectronic object 1 that has found itself in the field of illumination. At the same time, owing to a small size of each receiver 6 of the strip 5 of the photodetector 7, a spurious solar radiation (for example, with its availability in the day-time) reflected from the underlying surface decreases with the square of the number of receivers 6.

Signals from the output of respective receivers 6 of the strip 5 of the photodetector 7 arrive at the signal processing unit 11, which provides for the isolation of the radiation (speck of light) reflected from the input optics of optical and optoelectronic objects 1 from a background radiation of other objects sector of the surrounding area 15 in the area of space to be radar-detected (a sector of the surrounding area 15).

The isolation of the radiation (speck of light) reflected from optical and optoelectronic objects 1 in comparison with a background (solar, fire light, headlight, etc.) radiation, as well as with a diffusion-reflected radiation of the laser radiator from the surrounding area 15 is available by the fact that the received light signal within the receivers 6 of the strip 5 of the photodetector 7 is converted into the electrical signal and supplied in succession to an intensity threshold device where it is processed by digital filters and where it is compared with a threshold signal (set at the level of electrical signals coming from false targets - a false reflected radiation (false specks of light)), which affords the isolation of a valid signal arriving at a respective separate receiver 6 against a background of the underlying surface and the formation of code for displaying the position of the detected object 1 for the signal processing unit 11, as well as a signal for producing a sound signal to attract the operator's attention. In case a threshold excess, there is generated an "alarm" signal according to which the electrical signal is transmitted to the sound signaling device 29 (with the availability of this function in the signal processing unit 11), which warns the observer 26 of the detection of an optical and optoelectronic object 1 and also transmits the electrical pulse to the strip 12 of the light indicators 13 for displaying a detected object 1 in order to switch a respective signaling light indicator 13.

The strip 12 of the light indicators 13 for displaying a detected object 1 is oriented in the vertical plane and mounted in parallel to the strip 5 of the receivers 6 of the photodetector 7.

The number of the light indicators 13 of the strip 12 for displaying a detected object 1 corresponds to the selected angular resolution of finding the position of an optical or optoelectronic object 1 to be detected. In accordance with this, an algorithm of the signal processing from the strip 5 of the receivers 6 of the photodetector 7 presupposes the breaking down the strip 5 into groups of the receivers 6 in such a way that as a signal from the object 1 enters the input of one of the receivers 6 of a respective group, the output of the signal processing unit 11 generates the electrical signal for a light indicator 13 that is spatially conjugated with this group of the receivers 6.

An image of respective igniting light indicators 13 of the strip 12 for displaying a detected object 1, by means of the light-splitting cube 35 mounted in the optico-visual observation channel 33 of the observation system 31, is "introduced" into the eye of the operator (observer 26), is made coincident with an image of the surrounding area 15 along the vertical axis and allows for finding the exact position of an optical or optoelectronic object 1 by the observer 26 when this information is transmitted to him through the optico-visual observation channel 33 of the observation system 31.

An alarm signal from a respective light indicator 13 and a sound signal from the sound signaling device 29 are transmitted for the time of the order of 0.2-0.5 sec. In this time interval the observer 26 has an opportunity to react to a sound and/or light signal. For a more exact position finding of an optical or optoelectronic object 1 with its tie to the surrounding area 15, the observer 26 must change the direction of scanning. In so doing, in the repeated finding of the object 1, a sound and/or light signal of alarm will be transmitted again. After finding the position of the object 1 using a range scale marked on the instrument reticle, the observer 26 may find an approximate distance to the detected optical or optoelectronic objects 1.

Electric power supply of the laser radiator 2 is carried out using the power supply unit 3 whose operating conditions are specified by the signal processing unit 11. For example, the duration of an illuminating radiation from the radiator 2 is given to be equal to the duration of the cycle of inquiring the receivers 6 of the strip 5 of the photodetector 7.

The necessity of optical match, in an image field of the surrounding area 15 of the observer 26, of a radiation receive field of the strip 5 of the receivers 6 of the photodetector 7 with the indicatrix 20 of the radiation of the laser radiator 2 formed by the cylindrical objective lens 4 stems from the task to be solved by the proposed device for the detection of optical and optoelectronic objects - that is, to find the position of an optical or optoelectronic object 1.

The necessity of optical match of both vertical 18 and horizontal 19 axes of the indicatrix 20 of the radiation of the laser radiator 2 formed by the cylindrical objective lens 4, of the cylindrical objective lens 4 of the laser radiator 2, both vertical 21 and horizontal 22 axes of a radiation receive field 23 of the strip 5 of the receivers 6 of the photodetector 7, and both vertical 14 and horizontal 24 axes of a display field 25 of a detected object 1 of the strip 12 of the light indicators 13 for displaying a detected object 1 in an image field of the surrounding area 15 of an observer 26 stems from the same task.

To cut-off all false reflected radiations (false specks of light) from extraneous light sources of other objects of the surrounding area 15, the input objective lens 9 of the photodetector 7 may be provided with a narrow-band interference filter 40 having a pass band of, for example 40 nm.

The input objective lens 9 may have an automatic control to ensure the maintenance of an optimal level of the signal at the output of the receivers 6 of the strip 5 of the photodetector 7 when the signal level changes at the pupil of the objective lens 9, for example, by controlling a diaphragm 41 of the input objective lens 9.

The reception and processing of a valid signal reflected from objects and the imaging of the area to be reconnoitered are carried out in the device for the detection of optical and optoelectronic objects 1 using two separate channels (the reception channel 8 and the optico-visual observation channel 33), which makes it possible to eliminate a reciprocal influence of conflicting factors - to ensure the normal observation of the surrounding area, there has to be a high light-gathering power of the system, whereas to receive signals particularly in the daytime, care must be taken to decrease the light-gathering power.

As studies conducted show, the technical effect cited above is only achievable in the interrelated use of all totality of essential features of the claimed subject matter. This is supported, in particular, by examples of their practical implementation.

Noteworthy also are improvements in the efficiency of using the device for the detection of optical and optoelectronic objects, including under combat conditions, at the expense of increasing the device's detector capability as a result of improving noise immunity, efficiency of reconnaissance and probability of detection in the broad image field of the surrounding area 15 several times as compared to the best analogs with the same illuminating radiation power of the laser radiator.

Noise immunity of the device for the detection of optical and optoelectronic objects is improved at the expense of providing cutoff of the image reception of the area of space to be radar-detected (a sector of the surrounding area), said area adjoining the device for the detection of optical and optoelectronic objects and light scattering within said area makes the greatest contribution to the background.

The efficiency of the device for the detection of optical and optoelectronic objects is improved several times at the expense of the generation, by means of a cylindrical objective lens, of a beam of illuminating radiation with an indicatrix in the form of a "knife" from the laser radiator, and of the reception, with a multiple-unit linear photodetector, of a signal reflected from the matched area illuminated with a laser radiator.

There is provided the release of a reflected signal of the laser radiator against a background of noises: headlights of automobiles, illuminating lamps, luminous windows of apartments, with the availability of a bright sun, rocket flash, open fire, etc.

The control of the device for the detection of optical and optoelectronic objects is simplified at the expense of eliminating a considerable part of control and adjustment members.

A reciprocal influence of conflicting factors is ruled out - to ensure the normal observation of the surrounding area, there has to be a high light-gathering power of the system, whereas to receive signals particularly in the daytime, care must be taken to decrease the light-gathering power, by allowing for the separation of the receiving and processing of a valid signal reflected from the objects and the imaging of the area to be reconnoitered: these operations are carried out using two separate channels (a reception channel and an optico-visual observation channel).

**INDUSTRIAL APPLICABILITY**

The present invention has produced good results not only when used in the field of optoelectronic instrument manufacture, but also when applied in laser radar measuring and informational technique, in armament and combat materiel, in safeguarding systems, in particular in the process of airplane landing, mining and search-and-rescue operations, for the purposes of guarding, hunting, military engineering, in optical communication lines, etc., for the remote observation, tracking and detection of optical and optoelectronic instruments that carry out counter observation and aiming, and also as a display unit of such systems and devices when their optical and optoelectronic instruments fall within an observer's view (for example, binoculars, telescopes, photographic cameras, video cameras, motion-picture cameras, optical sights of small arms, tanks, artillery and rocket-propelled launchers, etc.), instruments for aiming, observation, reconnaissance, etc., and any other instruments provided with optical objective lenses.

Although the present invention has been described with reference to a preferred embodiment, the invention is not limited to the details thereof, and various changes and modifications obvious to one skilled in the art to which the invention pertains are deemed to be within the scope of the invention as further defined in the appended claims.

**Claims**

1. A device for the detection of optical and optoelectronic objects (1) by scanning a region to be radar-detected, comprising a laser radiator (2) with a power supply unit (3), said laser radiator being optically matched with an optical element forming a laser radiation, a photodetector (7) with an input objective lens (9), a signal processing unit (11) connected with its input to the output of the photodetector (7), a control unit for displaying a detected object (1) and an indicator, **characterized in that** the optical element of the laser radiator has the form of a cylindrical objective lens (4) that affords the generation of a beam (20) of laser radiation with a distribution of intensity in the distant zone in the form of a fan beam; the photodetector (7) has the form of a strip (5) of receivers (6) and is mounted in an upright position in the focal plane of a receiving channel (8); the control unit for displaying a detected object has the form of a strip (12) of luminous indicators (13) for displaying a detected object (1), said strip being mounted on a vertical axis (14) in a plane coincident with an image field of the scanned region (15); both vertical (18) and horizontal (19) axes of the fan beam (20) of the cylindrical objective lens (4) of the laser radiator (2), both vertical (21) and horizontal (22) axes of a radiation receive field (23) of the strip (5) of the receivers (6) of the photodetector (7), and both vertical (14) and horizontal (24) axes of a display field (25) of a detected object (1) of the strip (12) of the luminous indicators (13) for displaying a detected object (1) are aligned in an image field of the scanned region (15) visible to an observer (26); each luminous indicator (13) of the strip (12) for displaying a detected object (1) is connected through the signal processing unit (11) and through the output (16) of the photodetector (7) to a respective group of the receivers (6) of the strip (5) of the photodetector (7), respective outputs (17) of said receivers (6) being connected to the output (16) of the photodetector (7); the input objective lens (9) of the photodetector (7) is optically matched with inputs of the receivers (6) of the strip (5) of the photodetector (7); an input (27) of the power supply unit (3) of the laser radiator (2) is in electrical connection with one of outputs (28) of the signal processing unit (11) to shape emission impulses of illumination to be shaped by the laser radiator (2).

2. A device according to claim 1, **characterized in that** it further comprises a sound signaling device (29) that is in electrical connection with one of outputs (30) of the signal processing unit (11).

3. A device according to claim 1 or 2, **characterized in that** it further comprises an observation system (31) mounted to transmit a light signal of the detection of an optical or optoelectronic object (1) from a respective light indicator (13) to an observer (26).

4. A device according to claim 3, **characterized in that** said observation system (31) is made to the shape of in-series located and optically matched to each other along the horizontal axis: an optico-visual observation channel (33) of an eyepiece (34), a light-splitting cube (35), a reticle (36), an optical inversion system (37) and a transmit objective lens (38); said observation system (31) being mounted to enable an optical match between the light-splitting cube (35) and the light indicators (13) of the strip (12) for displaying a detected object (1) and a subsequent transmission of the light signal of the detection of an optical and/or optoelectronic object (1) from a respective light indicator (13) to an observer (26).

5. A device according to claim 1, **characterized in that** said cylindrical objective lens (4) is made to the shape of a cylindrical aspherical lens with an elliptical contour of the forming surface.

6. A device according to claim 1, **characterized in that** said input objective lens (9) of the photodetector (7) is provided with a narrow-band interference filter.

7. A device according to claim 1, **characterized in that** said input objective lens (9) of the photodetector (7) is made with an automatic control enabling the maintenance of an optimal signal level at the input of the receivers (6) of the strip (5) of the photodetector (7) as a signal level on the pupil of the input objective lens (9) changes.

**Patentansprüche**

1. Anordnung zum Entdecken von optischen und optoelektronischen Objekten (1) durch Abtasten eines Bereichs, der durch Radar erfasst werden soll, aufweisend

einen Laserradiator (2) mit einer Energieversorgungseinheit (3), wobei der Laserradiator optisch an ein optisches Element zum Bilden einer Laserabstrahlung angepasst ist,
einen Photodetektor (7) mit einer Eingangsobjektivlinse (9),
eine Signalverarbeitungseinheit (11), die mit ihrem Eingang mit dem Ausgang des Photodetektors (7) verbunden ist,
eine Regeleinheit zum Anzeigen eines entdeckten Objekts (1) und eines Indikators,
**dadurch gekennzeichnet, dass**
das optische Element des Laserradiators die Form einer zylindrischen Objektivlinse (4) besitzt, welche die Bildung eines Strahls (20) von Laserstrahlung mit einer Intensitätsverteilung in der entfernten Zone in Form eines Fächerstahls ermöglicht;
der Photodetektor (7) die Form eines Streifens (5) von Empfängern (6) besitzt und in einer aufrechten Position in der Brennebene eines Empfangskanals (8) montiert ist;
die Regeleinheit zum Anzeigen eines entdeckten Objekts die Form eines Streifens (12) von leuchtenden Indikatoren (13) zum Anzeigen eines entdeckten Objekts (1) besitzt, wobei der Streifen auf einer vertikalen Achse (14) in einer Ebene montiert ist, die mit einem Bildfeld des abgetasteten Bereichs zusammenfällt;
die vertikale (18) und horizontale (19) Achse des Fächerstrahls (20) der zylindrischen Objektivlinse (4) des Laserradiators (2), die vertikale (21) und horizontale (22) Achse eines Strahlungsempfangsfeldes (23) des Streifens (5) von den Empfängern (6) des Photodetektors (7) und die vertikale (14) und horizontale (24) Achse eines Anzeigefeldes (25) eines entdeckten Objekts (1) des Streifens (12) der leuchtenden Indikatoren (13) zum Anzeigen eines entdeckten Objekts (1) in einem Bildfeld des abgetasteten Bereichs (15), das für einen Betrachter (26) sichtbar ist, ausgerichtet sind; jeder leuchtende Indikator (13) des Streifens (12) zum Anzeigen eines entdeckten Objekts (1) durch die Signalverarbeitungseinheit (11) und durch den Ausgang (16) des Photodetektors (7) mit einer entsprechenden Gruppe von Empfängern (6) des Streifens (5) des Photodetektors (7) verbunden ist, wobei jeweilige Ausgänge (17) der Empfänger (6) mit dem Ausgang (16) des Photodetektors (7) verbunden sind; die Eingangsobjektivlinse (9) des Photodetektors (7) optisch an Eingänge der Empfänger (6) des Streifens (5) des Photodetektors (7) angepasst ist; ein Eingang (27) der Energieversorgungseinheit (3) des Laserradiators (2) elektrisch mit einem der Ausgänge (28) der Signalverarbeitungseinheit (11) verbunden ist, um Beleuchtungsausstrahlungssimpulse, die durch den Laserradiator (2) geformt werden sollen, zu formen.

2. Anordnung gemäß Anspruch 1,
   **dadurch gekennzeichnet, dass**
   sie ferner eine Geräuschsignalisierungseinheit (29) aufweist, die elektrisch mit einem der Ausgänge (30) der Signalverarbeitungseinheit (11) verbunden ist.

3. Anordnung gemäß Anspruch 1 oder 2,
   **dadurch gekennzeichnet, dass**
   sie ferner ein Beobachtungssystem (31) aufweist, das zum Übertragen eines Lichtsignals des Entdeckens eines optischen oder optoelektronischen Objekts (1) von einem jeweiligen Lichtindikator (13) an einen Betrachter (26) montiert ist.

4. Anordnung gemäß Anspruch 3,
   **dadurch gekennzeichnet, dass**
   das Beobachtungssystem (31) hergestellt ist in der Form von in Reihe platzierten und optisch einander entlang der horizontalen Achse angepassten: ein optisch-visueller Beobachtungskanal (33) eines Okulars (34), ein Licht-teilender Würfel (35), ein Retikel (36), ein optisches Inversionssystem (37) und eine Übertragungs-Objektivlinse (38); wobei das Beobachtungssystem (31) montiert ist, um eine optische Anpassung zwischen dem Lichtteilenden Würfel (35) und den Lichtindikatoren (13) des Streifens (12) zum Anzeigen eines entdeckten Objekts (1) und eine nachfolgende Übertragung des Lichtsignals der Entdeckung eines optischen und/oder optoelektronischen Objekts (1) von einem entsprechenden Lichtindikator (13) an einen Beobachter (26) zu ermöglichen.

5. Anordnung gemäß Anspruch 1,
   **dadurch gekennzeichnet, dass**
   die zylindrische Objektivlinse (4) in der Form einer zylindrischen asphärischen Linse mit einer elliptischen Kontur der Formfläche hergestellt ist.

6. Anordnung gemäß Anspruch 1,
   **dadurch gekennzeichnet, dass**
   die Eingangsobjektivlinse (9) des Photodetektors (7) mit einem schmallbandigen Interferenzfilter versehen ist.

7. Anordndung gemäß Anspruch 1,
   **dadurch gekennzeichnet, dass**
   die Eingangsobjektivlinse (9) des Photodetektors (7) mit einer automatischen Steuerung ausgerüstet ist, welche die Aufrechterhaltung eines optimalen Signalpegels am Eingang der Empfänger (6) des Streifens (5) des Photodetektors (7) ermöglicht, während sich ein Signalpegel auf dem Sehloch der Eingangsobjektivlinse (9) ändert.

**Revendications**

1. Dispositif pour la détection d'objets optiques et opto-électroniques (1) en scannant une zone à détecter au radar, comprenant un projecteur laser (2) équipé d'une unité d'alimentation en courant (3), ledit projecteur laser étant adapté optiquement à un élément optique formant une radiation laser, un photo-détecteur (7) équipé d'une lentille d'objectif d'entrée (9), une unité de traitement de signaux (11) raccordée par son entrée à la sortie du photo-détecteur (7), une unité de commande destinée à afficher un objet détecté (1) et un indicateur, **caractérisé en ce que** l'élément optique du projecteur laser a la forme d'une lentille d'objectif cylindrique (4) qui permet la génération d'un faisceau (20) de radiation laser avec une distribution d'intensité dans la zone distante sous forme d'un faisceau en éventail ; le photo-détecteur (7) a la forme d'une bande (5) de récepteurs (6) et est monté en position verticale dans le plan focal d'un canal récepteur (8); l'unité de commande destinée à afficher un objet détecté a la forme d'une bande (12) d'indicateurs lumineux (13) destinés à afficher un objet détecté (1), ladite bande (1) étant montée sur un axe vertical (14) dans un plan coïncidant avec un champ d'image de la zone scannée (15); les deux axes vertical (18) et horizontal (19) du faisceau en éventail (20) de la lentille d'objectif cylindrique (4) du projecteur laser (2), les deux axes vertical (21) et horizontal (2) d'un champ récepteur de radiation (23) de la bande (5) de récepteurs (6) du photo-détecteur (7), et les deux axes vertical (14) et horizontal (24) d'un champ d'affichage (25) d'un objet détecté (1) de la bande (12) d'indicateurs lumineux (13) destinés à afficher un objet détecté sont alignés dans un champ d'image de la zone scannée (15) visible pour un observateur (26) ; chaque indicateur lumineux (13) de la bande (12) destinée à afficher un objet détecté est raccordé par l'unité de traitement de signaux (11) et par la sortie (16) du photo-détecteur (7) à un groupe respectif de récepteurs (6) de la bande (5) du photo-détecteur (7), les sorties respectives (17) desdits récepteurs (6) étant raccordées à la sortie (16) du photo-détecteur (7) ; la lentille d'objectif d'entrée (9) du photo-détecteur (7) est harmonisée optiquement aux entrées des récepteurs (6) de la bande (5) du photo-détecteur (7) ; une entrée (27) de l'unité d'alimentation en courant (3) du projecteur laser (2) est en liaison électrique avec une des entrées (28) de l'unité de traitement de signaux (11) pour former des impulsions d'émission d'éclairage à former par le projecteur laser (2).

2. Dispositif selon la revendication 1, **caractérisé en ce qu'**il comprend en outre un dispositif de signalisation sonore (29) qui est en liaison électrique avec une des sorties (30) de l'unité de traitement de signaux (11).

3. Dispositif selon la revendication 1 ou 2, **caractérisé en ce qu'**il comprend en outre un système d'observation (31) monté de manière à transmettre un signal lumineux de détection d'un objet opto-électronique (1) d'un indicateur lumineux respectif (13) à un observateur (26).

4. Dispositif selon la revendication 3, **caractérisé en ce que** ledit système d'observation (31) est réalisé en forme de séries intégrées placées et adaptées mutuellement optiquement le long de l'axe longitudinal : un canal d'observation optico-visuel (33) d'un oculaire (34), un cube de fractionnement de lumière (35), un réticule (36), un système d'inversion optique (37) et une lentille d'objectif de transmission (38) ; ledit système d'observation (31) étant monté de manière à permettre une adaptation optique entre le cube de fractionnement de lumière (35) et les indicateurs lumineux (13) de la bande (12) pour afficher un objet détecté (1) et une transmission consécutive du signal lumineux de détection d'un objet optique et/ou opto-électronique (1) d'un indicateur lumineux respectif (13) à un observateur (26).

5. Dispositif selon la revendication 1, **caractérisé en ce que** ladite lentille d'objectif cylindrique (4) est réalisée en forme de lentille asphérique cylindrique avec un contour elliptique de la surface de formage.

6. Dispositif selon la revendication 1, **caractérisé en ce que** ladite lentille d'objectif cylindrique (9) du photo-détecteur (7) est équipée d'un filtre d'interférence à bande étroite.

7. Dispositif selon la revendication 1, **caractérisé en ce que** ladite lentille d'objectif cylindrique (9) du photo-détecteur (7) est réalisée avec une commande automatique permettant de maintenir un niveau de signal optimal à l'entrée des récepteurs (6) de la bande (5) du photo-détecteur (7) lorsqu'un niveau de signal sur la pupille de la lentille d'objectif d'entrée (9) change.

*FIG. 1*

EP 1 515 162 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2113717
- RU 2129288
- RU 2129287
- US 4902128 A